# FASCICULE DE BREVET EUROPEEN

(11) **EP 0 708 002 B1**
(45) Date de publication et mention de la délivrance du brevet: **11.08.1999**
(21) Numéro de dépôt: 95115594.4
(22) Date de dépôt: 04.10.1995
(51) Int. Cl.: B60R 21/00, B60N 2/26, G06K 7/08

(54) **Procédé et installation de détection de certains paramètres d'un siège auxiliaire pour enfant en vue de la commande du fonctionnement des airbags d'un véhicule**
Verfahren und Vorrichtung zur Erfassung gewisser Parameter eines Kindersitzes zur Steuerung eines Kraftfahrzeug-Gassacks
Method and device for detecting certain parameters of an auxiliary child seat intended to be used to control the functioning of a vehicle air bag

(30) Priorité: 17.10.1994 LU 88547; 15.02.1995 LU 88588
(43) Date de publication de la demande: 24.04.1996
(73) Titulaire: I.E.E. International Electronics & Engineering S.à.r.l., L-2632 Luxembourg (LU)
(72) Inventeur: Schoos, Aloyse, L-8094 Bertrange (LU); Witte, Michel, L-8077 Bertrange (LU)
(74) Mandataire: Freylinger, Ernest T.

(56) Documents cités:
- EP-A- 0 650 869
- WO-A-94/22693
- DE-A- 4 110 936
- DE-A- 4 410 402
- DE-A- 4 426 677
- RESEARCH DISCLOSURE, no. 355, 1 Novembre 1993 page 724 XP 000421342 'INFANT SEAT DETECTION SYSTEM'
- RESEARCH DISCLOSURE, no. 358, Février 1994 EMSWORTH,GB, page 64 XP 000439788 'PASSENGER SIDE AIR BAG DEPLOYMENT INHIBIT'
- RESEARCH DISCLOSURE, no. 359, Mars 1994 EMSWORTH,GB, pages 108-109, XP 000439939 'PASSIVE RF TECHNIQUE FOR DISABLING PASSENGER SIDE AIRBAG WHEN USED WITH A REARWARD FACING INFANT SEAT'

## Description

La présente invention concerne une installation de détection de certains paramètres d'un siège auxiliaire pour enfant placé sur un siège de passager d'un véhicule automobile équipé d'un système de protection par airbag, ces paramètres étant utilisables pour adapter le déploiement du ou des airbag(s) associé(s) au siège supportant ledit siège auxiliaire aux circonstances particulières déterminées par ces paramètres.

L'augmentation croissante du nombre d'équipements d'airbag dans les véhicules a permis de recueillir un grand nombre d'informations sur le fonctionnement des airbags, ce qui a largement contribué à leurs perfectionnements. L'un de ceux-ci consiste à soumettre le fonctionnement de l'airbag à une unité de commande intelligente qui peut être alimentée par différents détecteurs afin d'adapter le déploiement de l'airbag à certaines circonstances.

C'est ainsi, par exemple, que le document DE-4237072 propose un système de détection de l'occupation du siège du passager pour mettre hors service cet airbag lorsque ce siège n'est pas occupé, afin de ne pas devoir remplacer l'airbag lorsque le véhicule est réparable après un choc qui a déclenché le déploiement de l'airbag.

De nouveaux générateurs de gaz sont, par ailleurs, à l'étude pour permettre, à l'avenir, un fonctionnement à plusieurs niveaux et un déploiement modulé et plus nuancé qu'un tout ou rien, notamment pour tenir compte de la masse d'inertie du passager, qui peut être obtenu par les information fournies par le détecteur d'occupation du siège, lorsque celui-ci est constitué par un capteur de pression du type FSR.

Il est par ailleurs connu d'équiper chaque siège d'un véhicule de plusieurs airbags individuels dont les déploiements sont différents et adaptés aux zones à protéger.

Si le mérite des airbags a été reconnu entre-temps dans l'intérêt de la sécurité des passagers, il existe, néanmoins, des situations dans lesquelles le déploiement d'un airbag peut être néfaste, voire constituer un grave danger. Il existe actuellement sur le marché de nombreux types de sièges auxiliaires pour enfants ou bébés qui sont conçus pour être installés sur le siège du passager avant. Parmi ces sièges, les uns sont conçus pour être orientés dans le sens de la marche du véhicule et les autres dans le sens contraire avec le dos contre le vide-poche ou la planche de bord et d'autres peuvent être installés au choix dans un sens ou dans l'autre.

Or, pour la plupart des sièges qui sont tournés dans le sens contraire de la marche du véhicule, le déploiement de l'airbag risque de projeter violemment l'enfant avec le siège vers l'arrière du véhicule et d'être à l'origine de blessures graves. Dans un tel cas et pour les sièges concernés, il serait donc utile de pouvoir mettre l'airbag hors service. A cette fin, le document "Research Disclosure 358", Février 1994, Emsworth, GB, propose une installation de détection pour un siège auxiliaire pour enfants, qui comprend soit des interrupteurs à lames magnétiques intégrés dans le siège du passager et un aimant permanent intégré dans le siège auxiliaire, soit un émetteur-récepteur de radiofréquence intégré dans le siège du passager et un transpondeur radiofréquence fixé au siège auxiliaire.

Il a même été constaté que certains sièges pour enfant qui sont orientés dans le sens de la marche, peuvent également être dangereux en cas de déploiement de l'airbag, Si bien que certains constructeurs préconisent la mise hors service d'un airbag dès que le siège auquel il est associé est occupé par un siège auxiliaire pour enfant.

Il peut arriver, par ailleurs, que le siège pour enfant reste en place sur le siège du véhicule sans pour autant être occupé. Dans ce cas, il y a aussi intérêt à éviter le déploiement de l'airbag car, comme mentionné ci-dessus, le remplacement d'un airbag occasionne des frais assez substantiels.

Le but de la présente invention est de prévoir une installation qui permet de détecter, de façon fiable, différents paramètres d'un siège auxiliaire afin, soit de commander directement, dans certaines circonstances, la mise hors service du système airbag, soit, et de préférence, transmettre des signaux à une unité de commande intelligente de l'airbag qui est programmée pour commander l'airbag ou adapter son déploiement aux circonstances.

Pour atteindre cet objectif, l'installation selon l'invention permet de détecter, par voie électromagnétique, au moins la présence dudit siège auxiliaire.

Le mode d'exécution le plus simple permet de mettre hors service le ou les airbag(s) chaque fois que la présence d'un siège auxiliaire est détectée, qu'il soit occupé ou non et quelle que soit son orientation.

Selon un autre mode d'exécution, on détecte non seulement la présence mais également l'occupation et le positionnement du siège auxiliaire, ce qui permet de mettre hors service un airbag lorsque le siège auxiliaire est inoccupé ou qu'il est orienté dans le sens contraire de la marche, et de laisser en service ou de moduler l'intensité de son déploiement lorsque le siège auxiliaire est orienté dans le sens de la marche.

Cette détection du positionnement peut également être utilisée pour renseigner le chauffeur sur un positionnement incorrect indépendamment de l'orientation.

Selon un autre mode d'exécution, on détecte, en outre, le type du siège auxiliaire et/ou son code d'identification, ce qui permet de diversifier davantage la commande d'un airbag ou la modulation du déploiement pour tenir compte du fait que certains sièges sont plus sûrs que d'autres ou sont éventuellement équipés d'un dispositif de protection spécial.

L'invention telle que définie dans les revendications indépendantes, prevoit une installation comprenant au moins un circuit émetteur et au moins un circuit récepteur d'induction électromagnétique, tous incorporés dans le siège du passager du véhicule qui est protégé par airbag, au moins deux circuits résonnants incorporés dans la base du siège pour enfant et destiné à modifier, lorsque le siège pour enfant est placé sur ledit siège du passager, le couplage électromagnétique entre ledit circuit émetteur et ledit circuit récepteur pour permettre au circuit récepteur de délivrer un signal représentatif d'un ou de plusieurs paramètre(s) déterminé(s) du siège pour enfant.

L'installation peut comporter au moins une bobine émettrice alimentée en courant alternatif par un oscillateur et au moins une bobine réceptrice, les bobines émettrices et réceptrices étant incorporées dans le siège du passager.

Les bobines émettrices et réceptrices peuvent être des bobines plates imprimées sur une feuille de support flexible.

Le circuit résonnant incorporé dans le siège pour enfant peut être une bobine plate associée à un circuit électronique destiné à moduler le couplage électromagnétique avec un code ou une information caractéristique.

Le siège pour enfant comporte deux circuits résonnants dont les circuits associés produisent des modulations différentes en vue de leur distinction et, par conséquent, de la détection de l'orientation du siège pour enfant.

Au lieu de commander directement la mise hors service d'un airbag en fonction des données captées, il est préférable de transmettre les données relatives à différents paramètres du siège pour enfant à une unité de commande intelligente auxquels sont soumis de plus en plus les équipements airbag. Cette unité exécute alors la commande de fonctionnement de l'airbag en fonction de l'information reçue.

Les circuits émetteurs et récepteurs peuvent aussi être constitués, chacun, d'au moins une structure inductive allongée s'étendant sur un côté latéral du siège, alors que les circuits résonnants comportent des bobines inductives situées latéralement, le long des deux côtés, dans la base du siège pour enfant, les structures inductives dans le siège et les bobines dans le siège pour enfant ayant des dimensions superficielles supérieures ou comparables à la distance verticale entre lesdites structures et lesdites bobines.

Le siège pour passager contient, de préférence, de chaque côté, un couple de structures émettrices et réceptrices. Vu que ces deux structures inductives se trouvent sur les côtés du siège passager, c'est-à-dire dans des zones subissant moins de déformation que la zone centrale du siège, le système de détection est peu perturbé par les déformations du siège.

Étant donné que les dimensions superficielles des structures inductives et du circuit résonnant sont relativement grandes, il est possible de faciliter le couplage électromagnétique et l'association géométrique et de réduire la sensibilité à de faibles déplacements du siège pour enfant.

Les couples de structures émettrices et réceptrices sont, de préférence, combinées sur une mince pellicule flexible incorporée dans le siège, si bien que le passager n'éprouve aucune gêne.

Le couplage électromagnétique peut être modulé par commutation de la fréquence de résonance du circuit incorporé dans le siège pour enfant. Une telle modulation ne consomme pratiquement pas d'énergie.

La modulation et l'information transmise étant en relation temporelle connue avec le générateur de l'excitation, on peut, pour améliorer le rapport signal/bruit, utiliser des méthodes de détection synchrones. La modulation du couplage électromagnétique par une sous-porteuse synchrone sert à rendre l'interprétation du signal unique et donc plus fiable.

Pour réduire l'influence de la tolérance des composants électroniques et éliminer des phénomènes d'annulation de phases, la fréquence d'excitation peut être variée de façon périodique dans une bande de fréquences prédéfinies.

La démodulation peut être synchronisée avec le signal d'excitation et la réception peut utiliser des méthodes de coïncidence avec le signal émis.

Le siège pour enfant contient avantageusement un système de reconnaissance de l'occupation de ce siège. De tels systèmes sont connus en soi et sont déjà couramment utilisés pour détecter l'occupation d'un siège de passager. Dans ce cas, l'information transmise par la modulation du couplage électromagnétique du circuit résonnant est modifiée par le capteur d'occupation du siège pour enfant afin de transmettre l'information relative à l'occupation du siège à l'unité de commande de l'airbag. Cette information sert à éviter le déploiement d'un airbag lorsque le siège pour enfant n'est pas occupé, quelle que soit son orientation.

Pour transmettre l'information relative à la présence, l'orientation, le type et, éventuellement, l'occupation du siège pour enfant, il est possible de moduler le couplage inductif par une séquence binaire pseudo-aléatoire imposée par un circuit électronique au circuit résonnant dans le siège pour enfant.

D'autres particularités et caractéristiques de l'invention ressortiront de la description de quelques modes de réalisation préférés, présentés ci-dessous, à titre d'illustration, en référence aux dessins annexés, dans lesquels :
- la Figure 1 représente une vue schématique latérale du siège pour enfant placé sur le siège du passager,
- la Figure 2 est un schéma en bloc des circuits électromagnétiques,
- la Figure 3 représente une variante avantageuse du circuit résonnant dans le siège pour enfant,
- la Figure 4 est un schéma en bloc des circuits dans le siège du passager,
- la Figure 5 est une variante avantageuse des circuits résonnants du siège pour enfant,
- la Figure 6 montre une vue en plan d'un siège de passager avec une variante d'un circuit inductif selon la présente invention,
- la Figure 7 montre schématiquement une coupe horizontale à travers la base d'un siège pour enfant avec un circuit résonnant,
- la Figure 8 est une vue schématique en superposition des circuits inductifs et résonnants des Figures 6 et 7 lorsque le siège pour enfant est placé sur le siège du passager.

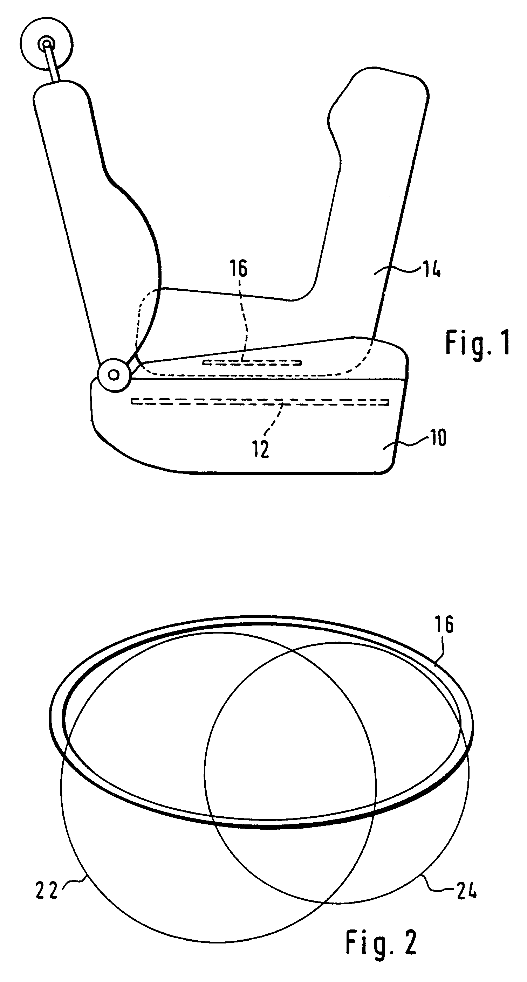

La référence 10 sur la Figure 1 illustre schématiquement le siège du passager avant d'un véhicule automobile. Ce siège est équipé d'un capteur de pression 12 du type FSR tel que proposé dans le document 4237072 pour détecter l'occupation du siège et commander la mise hors service de l'airbag lorsque ce siège est vide. Le capteur se présente sous forme d'un circuit imprimé sur un support flexible qui s'adapte aux déformations du siège 10.

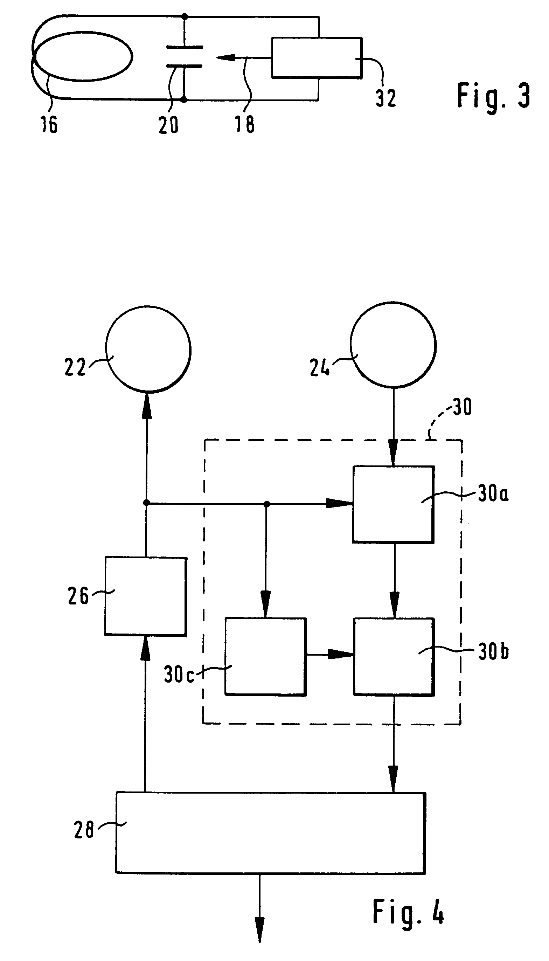

La référence 14 désigne schématiquement un siège pour enfant installé sur le siège du passager 10. Dans ce siège 14 est incorporé un support de résonateur 16 qui est constitué essentiellement par une bobine plate pouvant, par exemple, être imprimée sur un support approprié avec un condensateur 20 (voir Figure 3) pour former un circuit résonnant LC.

Sur le capteur, dans le siège 10 du passager, se trouvent deux bobines 22, 24 (voir Figure 2). Ces bobines 22, 24 ne font pas partie d'un circuit résonnant et peuvent avoir un facteur de qualité médiocre, ce qui permet l'utilisation de bobines produites par des moyens très économiques, par exemple, imprimées par sérigraphie sur la feuille plastique de support du capteur 10.

L'une des bobines, par exemple, la bobine 22 est une bobine émettrice qui, comme le montre la Figure 4, est alimentée en courant alternatif par un oscillateur 26 sous la commande d'un microprocesseur 28 qui peut être le microprocesseur standard du capteur de pression 12. L'autre bobine 24, qui est une bobine réceptrice, est connectée à travers un circuit 30 d'amplification et de démodulation au microprocesseur 28 qui détecte l'état d'excitation de la bobine réceptrice 24.

Si sur le siège 10 est installé un siège pour enfant dans le socle duquel est intégré un résonateur 16 et que la bobine de ce résonateur couvre, au moins partiellement, chacune des deux bobines 22 et 24, comme représenté sur la Figure 2, le résonateur 16 est fortement excité si la fréquence de l'oscillateur 26 est proche de la fréquence de résonance du résonateur 16. Celui-ci influence alors, à son tour, le couplage électromagnétique entre la bobine émettrice 22 et la bobine réceptrice 24. Cette modification de couplage est détectée à travers le circuit 30 et le microprocesseur 28 pour déclencher un signal à destination de l'unité de commande de l'airbag.

Autrement dit, si les sièges pour enfant comportent, de façon standardisée, un résonateur 16 tel que décrit ci-dessus et que ce résonateur soit toujours prévu à un endroit bien déterminé de telle manière qu'il soit superposé au moins partiellement aux bobines 22 et 24 dans le siège du passager lorsque le siège pour enfant est orienté dans le sens contraire de la marche du véhicule et qu'il soit hors de l'influence des deux bobines 22 et 24 lorsque le siège est orienté dans la direction de la marche du véhicule, l'airbag peut être mis hors fonctionnement lorsque le siège pour enfant est tourné vers l'arrière et peut rester en service lorsqu'il est tourné vers l'avant.

Comme le montre la Figure 3, chaque circuit résonnant comporte avantageusement un circuit électronique 32 destiné à moduler le couplage électromagnétique tel que symbolisé par la flèche 18 pour permettre une meilleure identification du résonateur et des informations à transmettre. Un tel circuit peut être constitué d'un circuit intégré fonctionnant sans apport d'énergie autre que celle de la tension induite dans le résonateur.

Pour améliorer la fiabilité de l'exploitation des résultats de la détection, la modulation du couplage électromagnétique au niveau du circuit 32 est avantageusement réalisée avec une sous-porteuse synchrone avec le générateur d'excitation. Dans ce cas, la démodulation est synchronisée avec le signal d'excitation dans le circuit 30 de la Figure 4 qui comportera, dans ce cas, un démodulateur synchrone 30a de la porteuse et un démodulateur synchrone 30b de la sous-porteuse ainsi qu'un diviseur 30c sur la sous-porteuse.

Le circuit 32 peut comporter, en option, un système permettant d'exclure la possibilité que le fonctionnement de l'airbag soit mis hors service alors qu'il ne devrait pas l'être, par exemple lorsqu'un passager emporte un instrument ou appareil contenant une bobine susceptible d'être excitée par l'émetteur 22. Pour parer à cette éventualité, certes assez rare mais théoriquement possible, qu'un résonateur parasitaire soit détecté en lieu et place du siège pour enfant, le circuit 32 sert à moduler le couplage du résonateur 16 avec un code ou information caractéristique, par exemple une séquence binaire bien définie et suffisamment longue pour que la probabilité de capter cette séquence d'une source parasitaire, c'est-à-dire sans l'existence de ce circuit, soit négligeable.

En plus de la fonction d'identification, la séquence binaire générée par le circuit intégré 32 peut être porteuse d'informations supplémentaires, telles que des renseignements sur le type ou le modèle du siège pour enfant si on rajoute les bits nécessaires aux codes de base.

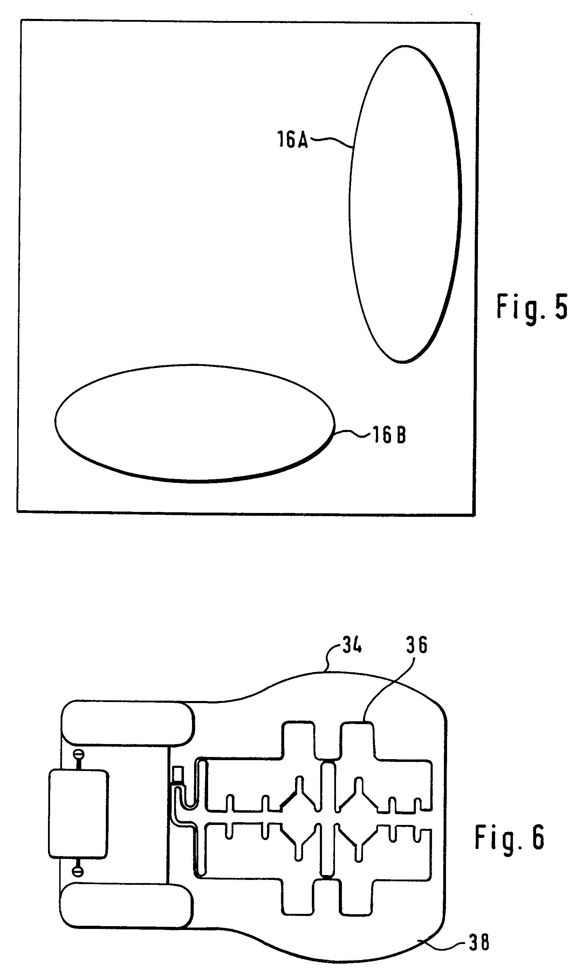

La Figure 5 illustre schématiquement une variante dans laquelle deux résonateurs 16A et 16B, tels que décrits ci-dessus, sont incorporés dans le socle du siège pour enfant. Les circuits 32 associés à ces résonateurs 16A et 16B produisent des modulations différentes, par exemple par différentes sous-porteuses, ce qui permet de reconnaître automatiquement l'orientation du siège pour la commande de la mise hors service de l'airbag seulement lorsque le siège est tourné vers l'arrière. Il est bien entendu également possible de prévoir un système avec un nombre de résonateurs supérieur à deux.

Etant donné que les bobines dans le siège pour enfant et sur le capteur de pression 12 sont réalisables sans frais substantiels et que la commande peut être assurée par le microprocesseur standard de toute façon présent pour le fonctionnement du capteur de pression, le système proposé par l'invention est très bon marché.

La Figure 6 montre un siège de passager 34 avec une variante de circuits inductifs qui sont, de préférence, imprimés sur une mince pellicule flexible qui peut être incorporée dans la partie supérieure du siège 34 sans gêner le confort du passager.

Ces circuits sont constitués de deux structures allongées 36, 38 s'étendant respectivement le long d'un côté latéral du siège. Chacune des structures comporte deux boucles inductives, l'une étant une antenne émettrice et l'autre une antenne réceptrice, ces boucles pouvant être superposées, par exemple de part et d'autre de leur pellicule de support. Ces boucles ont, dans l'exemple représenté, un contour irrégulier et complexe dont l'allure peut varier selon la forme du coussin du siège dans lequel elles sont incorporées. Quoiqu'il est préférable d'avoir les deux structures 36, 38, il est à noter qu'en principe, une seule des structures 36 ou 38 peut suffire pour la détection.

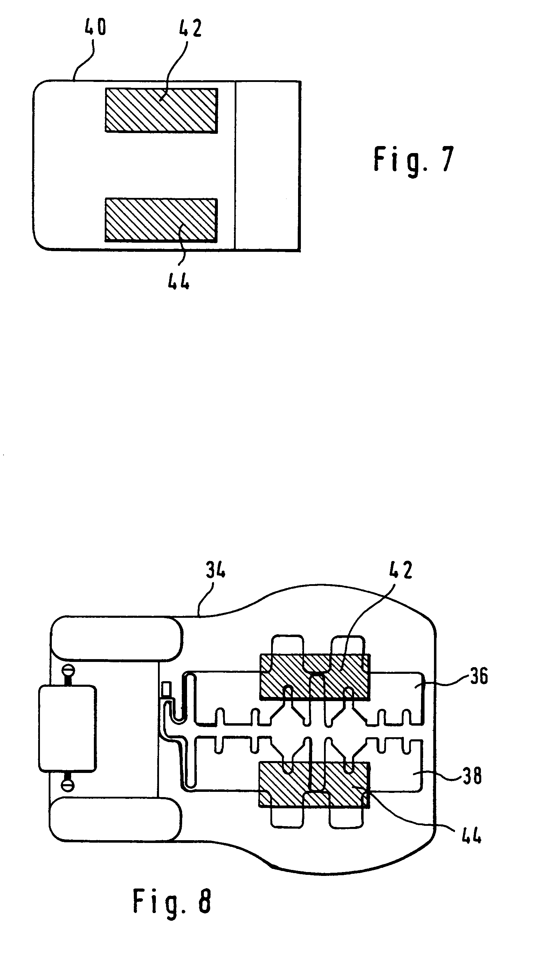

La Figure 7 montre un siège pour enfant 40 dans la base duquel se trouvent des circuits résonnants sur un support approprié. Ces circuits comportent deux résonateurs 42, 44 constitués de grandes bobines s'étendant le long des deux côtés latéraux à la base du siège 40.

La Figure 8 montre schématiquement le siège pour enfant 40 placé sur le siège du passager 34. Comme on peut le constater sur la Figure 8, les résonateurs 42 et 44 sont toujours superposés aux antennes émettrices et réceptrices des structures inductives 36, 38 dans le siège du passager, même en cas de glissement du siège pour enfant 40 par rapport au siège pour passager 34.

Les circuits inductifs et résonnants des Figures 6-8 fonctionnent de la même manière que ceux des figures précédentes et permettent de recueillir, au choix, différentes informations sur le siège 40, notamment celles relatives au positionnement et à l'orientation du siège pour enfant 40 par rapport au siège du passager 34, la présence du siège 40, éventuellement de son type et de l'occupation du siège pour enfant 40.

Si l'invention a été décrite, à titre d'illustration, en référence à la protection d'un siège auxiliaire installé sur le siège du passager avant d'un véhicule, il est bien entendu qu'elle s'applique également aux sièges de passager arrière lorsque ceux-ci sont protégés par un système airbag.

De même, les véhicules dont chaque siège est équipé de plusieurs airbags ou dont les déploiements sont modulés par plusieurs cartouches explosives, peuvent tirer un grand avantage des informations fournies par la présente invention afin d'adapter le déploiement du ou des airbag(s) aux circonstances particulières.

## Revendications

1. Installation de détection de certains paramètres d'un siège auxiliaire pour enfant (14) placé sur un siège de passager (10) d'un véhicule automobile équipé d'un système de protection par airbag, ces paramètres étant utilisables pour adapter le déploiement de l'airbag resp. des airbags associés au siège (10) supportant ledit siège auxiliaire (14) aux circonstances particulières déterminées par ces paramètres, comprenant au moins un circuit émetteur (22) d'induction et au moins un circuit récepteur (24) d'induction électromagnétiques, tous incorporés dans le siège de passager (10) du véhicule qui est protégé par airbag, des moyens (16) incorporés dans la base du siège pour enfant (14) et destinés à influencer, lorsque le siège pour enfant (14) est placé sur ledit siège du passager (10), le couplage électromagnétique entre le circuit émetteur resp. les circuits émetteurs (22) et le circuit récepteur resp. les circuits récepteurs (24) pour permettre au circuit récepteur resp. aux circuits récepteurs (24) de délivrer un signal représentatif d'un ou de plusieurs paramètres déterminés, **caractérisé en ce que** lesdits moyens (16) comportent au moins deux circuits résonnants (16A, 16B) associés chacun à un circuit de modulation produisant des modulations différentes en vue de leur distinction.

2. Installation selon la revendication 1, caractérisée en ce que chaque circuit résonnant (16A, 16B) incorporé dans le siège pour enfant (14) comporte une bobine plate (16) associée à un circuit électronique (32) destiné à moduler le couplage électromagnétique avec une information caractéristique.

3. Installation selon l'une quelconque des revendications 1 ou 2, caractérisée par une commutation de la fréquence de résonance des circuits résonnants dans le siège pour enfant (14) (40) en vue d'une modulation du couplage électromagnétique.

4. Installation selon la revendication 3, caractérisée en ce que la modulation du couplage électromagnétique est réalisée avec une sous-porteuse synchrone avec l'excitation générée par le circuit émetteur.

5. Installation selon la revendication 4 caractérisée en ce que les sous-porteuses de chacun des circuits résonnants sont différentes.

6. Installation selon l'une quelconque des revendications 3 à 5, caractérisée en ce que la démodulation dans le ou les circuits(s) récepteur(s) est synchronisée avec le signal d'excitation et en ce que la réception utilise des méthodes de coïncidence avec le signal émis.

7. Installation selon l'une quelconque des revendications 1 à 6, caractérisée en ce que la fréquence d'excitation du ou des circuit(s) émetteur(s) est variée de façon périodique dans une bande de fréquences prédéfinies.

8. Installation selon l'une quelconque des revendications 1 à 7, caractérisée en ce que le couplage inductif est modulé par une séquence binaire pseudo-aléatoire imposée par un circuit électronique au circuit résonnant.

9. Installation selon l'une quelconque des revendications 1 à 8, caractérisée par la présence, dans le siège pour enfant (14) (40), d'un capteur d'occupation de celui-ci et en ce que l'information transmise par la modulation du couplage électromagnétique est modifiée par ce capteur d'occupation.

10. Installation selon l'une quelconque des revendications 1 à 9, caractérisée en ce que le ou les circuit(s) émetteur(s) sont constitués chacun d'au moins une structure inductive allongée (36, 38) s'étendant sur au moins un côté latéral du siège (34), en ce que les circuits résonnants dans le siège pour enfant comportent des bobines inductives (42, 44) situées latéralement, des deux côtés, dans la base du siège pour enfant (40) et en ce que les structures inductives dans le siège du passager (34) et les bobines (42, 44) dans le siège pour enfant (40) ont des dimensions superficielles supérieures ou comparables à la distance verticale entre les deux structures inductives et lesdites bobines inductives.

11. Installation selon l'une quelconque des revendications 1 à 9, caractérisée en ce que le ou les circuit(s) récepteur(s) sont constitués chacun d'au moins une structure inductive allongée (36, 38) s'étendant sur au moins un côté latéral du siège (34), en ce que les circuits résonnants dans le siège pour enfant comportent des bobines inductives (42, 44) situées latéralement, des deux côtés, dans la base du siège pour enfant (40) et en ce que les structures inductives dans le siège du passager (34) et les bobines (42, 44) dans le siège pour enfant (40) ont des dimensions superficielles supérieures ou comparables à la distance verticale entre les deux structures inductives et lesdites bobines inductives.

12. Installation selon la revendication 10, caractérisée en ce que le siège de passager (34) contient, de chaque côté, au moins une structure émettrice (36, 38).

13. Installation selon la revendication 11, caractérisée en ce que le siège de passager (34) contient, de chaque côté, au moins une structure réceptrice (36, 38).

14. Installation selon l'une quelconque des revendications 10 à 13, caractérisée en ce que lesdites structures émettrices et réceptrices sont formées sur une mince pellicule flexible incorporée dans le siège (34).

15. Siège auxiliaire pour enfants destiné à être installé sur un siège de passager (10) d'une voiture automobile, le siège de passager (10) comprenant au moins un circuit émetteur (22) d'induction et au moins un circuit récepteur (24) d'induction électromagnétiques, le siège auxiliaire (14) ayant incorporé des moyens (16) destinés à influencer, lorsque le siège pour enfant (14) est placé sur ledit siège du passager (10), le couplage électromagnétique entre le circuit émetteur resp. les circuits émetteurs (22) et le circuit récepteur resp. les circuits récepteurs (24) pour permettre au circuit récepteur resp. aux circuits récepteurs (24) de délivrer un signal représentatif d'un ou de plusieurs paramètres déterminés, **caractérisé en ce que** lesdits moyens comportent au moins deux circuits résonnants (16A, 16B) associés chacun à un circuit de modulation produisant des modulations différentes en vue de leur distinction.

16. Siège auxiliaire pour enfants selon la revendication 15, caractérisé en ce que chaque circuit résonnant (16A, 16B) comporte une bobine plate associée à un circuit électronique (32) destiné à moduler le couplage électromagnétique avec une information caractéristique.

17. Siège auxiliaire pour enfants selon l'une des revendications 15 ou 16, caractérisé en ce que chaque circuit résonnant comprend des moyens de commutation de la fréquence de résonance du circuit résonnant en vue d'une modulation du couplage électromagnétique.

18. Siège auxiliaire pour enfants selon la revendication 17, caractérisée en ce que la modulation du couplage électromagnétique est réalisée avec une sous-porteuse synchrone avec l'excitation générée par le circuit émetteur.

19. Siège auxiliaire pour enfants selon la revendication 18, caractérisé en ce que les sous-porteuses de chacun des circuits résonnants sont différentes.

20. Siège auxiliaire pour enfants selon l'une des revendications 15 à 19, caractérisé en ce que chaque circuit résonnant comprend un circuit électronique pour imposer une séquence binaire pseudo-aléatoire au circuit résonnant.

21. Siège auxiliaire pour enfants selon l'une des revendications 15 à 20, caractérisé par un capteur d'occupation du siège auxiliaire.

22. Paire de circuits résonnants (16A, 16B) incorporée dans un siège auxiliaire pour enfant (14) destiné à être installé sur un siège de passager (10) d'une voiture automobile, le siège de passager (10) comprenant au moins un circuit émetteur (22) d'induction et au moins un circuit récepteur (24) d'induction électromagnétiques, lesdits circuits résonnants (16A, 16B) étant destinés à influencer, lorsque le siège pour enfant (14) est placé sur ledit siège du passager (10), le couplage électromagnétique entre le circuit émetteur resp. les circuits émetteurs (22) et le circuit récepteur resp. les circuits récepteurs (24) pour permettre au circuit récepteur resp. aux circuits récepteurs (24) de délivrer un signal représentatif d'un ou de plusieurs paramètres déterminés, **caractérisé en ce que** chaque circuit résonnant (16A, 16B) de la paire de circuits résonnants est associé à un circuit de modulation et en ce que les circuits de modulation des deux circuits résonnants produisent des modulations différentes en vue de leur distinction.

23. Paire de circuits résonnants selon la revendication 22, caractérisé en ce que chaque circuit résonnant comporte une bobine plate associée à un circuit électronique (32) destiné à moduler le couplage électromagnétique avec une information caractéristique.

24. Paire de circuits résonnants selon l'une des revendications 22 ou 23, caractérisé en ce que chaque circuit résonnant comprend des moyens de commutation de la fréquence de résonance du circuit résonnant en vue d'une modulation du couplage électromagnétique.

25. Paire de circuits résonnants selon la revendication 24, caractérisée en ce que la modulation du couplage électromagnétique est réalisée avec une sous-porteuse synchrone avec l'excitation générée par le(s) circuit(s) émetteur(s).

26. Paire de circuits résonnants selon la revendication 25, caractérisé en ce que les sous-porteuses de chacun des circuits résonnants sont différentes.

27. Paire de circuits résonnants selon l'une des revendications 22 à 25, caractérisé en ce que chaque circuit résonnant comprend un circuit électronique pour imposer une séquence binaire pseudo-aléatoire au circuit résonnant.

## Claims

1. Installation for detecting certain parameters of an auxiliary child seat (14) placed on a passenger seat (10) of a motor vehicle equipped with an airbag protection system, these parameters being usable for adapting the deployment of the airbag or airbags associated with the seat (10) supporting the said auxiliary seat (14) to the particular circumstances determined by these parameters, comprising at least one electromagnetic induction transmitting circuit (22) and at least one electromagnetic induction receiving circuit (24), all incorporated in the passenger seat (10) of the vehicle protected by airbag, means (16) incorporated in the base of the child seat (14) and intended, when the child seat (14) is placed on the said passenger seat (10), to modify the electromagnetic coupling between the transmitting circuit or circuits (22) and the receiving circuit or circuits (24) to make it possible for the receiving circuit or circuits (24) to deliver a signal representative of one or more of the parameters so determined, **characterised in that** the said means (16) comprise at least two resonant circuits (16A, 16B) each associated with a modulation circuit producing different modulations with a view to distinguishing between them.

2. Installation according to Claim 1, characterised in that each resonant circuit (16A, 16B) incorporated in the child seat (14) includes a flat coil (16) associated with an electronic circuit (32) intended to modulate the electromagnetic coupling with characteristic information.

3. Installation according to either of Claims 1 or 2, characterised by a switching of the resonant frequency of the resonant circuits in the child seat (14) (40) with a view to a modulation of the electromagnetic coupling.

4. Installation according to Claim 3, characterised in that the electromagnetic coupling is modulated with a sub-carrier synchronous with the excitation generated by the transmitting circuit.

5. Installation according to Claim 4, characterised in that the sub-carriers of each of the resonant circuits are different.

6. Installation according to any one of Claims 3 to 5, characterised in that the demodulation in the receiving circuit or circuits is synchronised with the excitation signal and in that the reception uses methods of coincidence with the transmitted signal.

7. Installation according to any one of Claims 1 to 6, characterised in that the excitation frequency of the transmitting circuit or circuits is varied periodically in a predefined frequency band.

8. Installation according to any one of Claims 1 to 7, characterised in that the inductive coupling is modulated by a pseudo-random binary sequence imposed by an electronic circuit on the resonant circuit.

9. Installation according to any one of Claims 1 to 8, characterised by the presence, in the child seat (14) (40), of a detector of the occupancy of the seat and in that the information transmitted by the modulation of the electromagnetic coupling is modified by this detector of occupancy.

10. Installation according to any one of Claims 1 to 9, characterised in that the transmitting circuit or circuits each consist of at least one elongated inductive structure (36, 38) extending over at least one lateral side of the seat (34), in that the resonant circuits in the child seat incorporate inductive coils (42, 44) located laterally on the two sides in the base of the child seat (40) and in that the inductive structures in the passenger seat (34) and the coils (42, 44) in the child seat (40) have superficial dimensions greater than or comparable with the vertical distance between the two inductive structures and the said inductive coils.

11. Installation according to any one of Claims 1 to 9, characterised in that the receiving circuit or circuits each consist of at least one elongated inductive structure (36, 38) extending over at least one lateral side of the seat (34), in that the resonant circuits in the child seat comprise inductive coils (42, 44) located laterally on the two sides in the base of the child seat (40) and in that the inductive structures in the passenger seat (34) and the coils (42, 44) in the child seat (40) have superficial dimensions greater than or comparable with the vertical distance between the two inductive structures and the said inductive coils.

12. Installation according to Claim 10, characterised in that the passenger seat (34) contains, on each side, at least one transmitting structure (36, 38).

13. Installation according to Claim 11, characterised in that the passenger seat (34) contains, on each side, at least one receiving structure (36, 38).

14. Installation according to any one of Claims 10 to 13, characterised in that the said transmitting and receiving structures are formed on a flexible thin film incorporated in the seat (34).

15. Auxiliary child seat intended to be installed on a passenger seat (10) of a motor vehicle, the passenger seat (10) incorporating at least one electromagnetic induction transmitting circuit (22) and at least one electromagnetic induction receiving circuit (24), the auxiliary seat (14) having incorporated means (16) intended, when the child seat (14) is placed on the said passenger seat (10), to modify the electromagnetic coupling between the transmitting circuit or circuits (22) and the receiving circuit or circuits (24) so as to make it possible for the receiving circuit or circuits (24) to deliver a signal representative of one or more of the parameters so determined, **characterised in that** the said means (16) comprise at least two resonant circuits (16A, 16B) each associated with a modulation circuit producing different modulations with a view to distinguishing between them.

16. Auxiliary child seat according to Claim 15, characterised in that each resonant circuit (16A, 16B) includes a flat coil associated with an electronic circuit (32) intended to modulate the electromagnetic coupling with characteristic information.

17. Auxiliary child seat according to one of Claims 15 or 16, characterised in that each resonant circuit includes means for switching the resonant frequency of the resonant circuit with a view to a modulation of the electromagnetic coupling.

18. Auxiliary child seat according to Claim 17, characterised in that the electromagnetic coupling is modulated with a sub-carrier synchronous with the excitation generated by the transmitting circuit.

19. Auxiliary child seat according to Claim 18, characterised in that the sub-carriers of each of the resonant circuits are different.

20. Auxiliary child seat according to one of Claims 15 to 19, characterised in that each resonant circuit includes an electronic circuit to impose a pseudo-random binary sequence on the resonant circuit.

21. Auxiliary child seat according to one of Claims 15 to 20, characterised by a detector of the occupancy of the auxiliary seat.

22. Pair of resonant circuits (16A, 16B) incorporated in an auxiliary child seat (14) intended to be installed on a passenger seat (10) of a motor vehicle, the passenger seat (10) incorporating at least one electromagnetic induction transmitting circuit (22) and at least one electromagnetic induction receiving circuit (24), the said resonant circuits (16A, 16B) being intended, when the child seat (14) is placed on the said passenger seat (10), to modify the electromagnetic coupling between the transmitting circuit or circuits (22) and the receiving circuit or circuits (24) so as to make it possible for the receiving circuit or circuits (24) to deliver a signal representative of one or more of the parameters so determined, **characterised in that** each resonant circuit (16A, 16B) of the pair of resonant circuits is associated with a modulation circuit and in that the modulation circuits of the two resonant circuits produce different modulations with a view to distinguishing between them.

23. Pair of resonant circuits according to Claim 22, characterised in that each resonant circuit includes a flat coil associated with an electronic circuit (32) intended to modulate the electromagnetic coupling with characteristic information.

24. Pair of resonant circuits according to one of Claims 22 or 23, characterised in that each resonant circuit includes means for switching the resonant frequency of the resonant circuit with a view to a modulation of the electromagnetic coupling.

25. Pair of resonant circuits according to Claim 24, characterised in that the electromagnetic coupling is modulated with a sub-carrier synchronous with the excitation generated by the transmitting circuit or circuits.

26. Pair of resonant circuits according to Claim 25, characterised in that the sub-carriers of each of the resonant circuits are different.

27. Pair of resonant circuits according to one of Claims 22 to 25, characterised in that each resonant circuit includes an electronic circuit to impose a pseudo-random binary sequence on the resonant circuit.

## Patentansprüche

1. Anlage zur Erfassung gewisser Parameter eines Kinder-Hilfssitzes (14), der auf einem Passagiersitz (10) eines mit einem Airbag-Schutzsystem ausgerüsteten Kraftfahrzeugs angeordnet ist, wobei diese Parameter verwendbar sind, um die Entfaltung des bzw. der mit dem Sitz (10), der den Hilfssitz (14) trägt, verbundenen Airbags, an die durch diese Parameter festgelegten, besonderen Umstände anzupassen, aufweisend mindestens eine elektromagnetische Induktions-Sendeschaltung (22) und mindestens eine elektromagnetische Induktions-Empfangsschaltung (24), die alle in den durch einen Airbag geschützten Passagiersitz (10) des Fahrzeugs eingebaut sind, Mittel (16), die in die Basis des Kindersitzes (14) eingebaut sind, und dazu bestimmt sind, dann, wenn der Kindersitz (14) auf dem Passagiersitz (10) angeordnet ist, die elektromagnetische Kopplung zwischen der Sendeschaltung bzw. den Sendeschaltungen (22) und der Empfangsschaltung bzw. den Empfangsschaltungen (24) zu beeinflussen, um der Empfangsschaltung bzw. den Empfangsschaltungen (24) zu ermöglichen, ein für einen oder mehrere festgelegte Parameter repräsentatives Signal auszugeben, dadurch gekennzeichnet, daß die Mittel (16) mindestens zwei Resonanzkreise (16A, 16B) umfassen, von denen jeder mit einer Modulationsschaltung verbunden ist, wobei die Modulationsschaltungen verschiedene Modulationen erzeugen, um die Resonanzkreise unterscheiden zu können.

2. Anlage gemäß Anspruch 1, dadurch gekennzeichnet, daß jeder in den Kindersitz (14) eingebaute Resonanzkreis (16A, 16B) eine flache Spule (16) umfaßt, die einer elektronischen Schaltung (32) zugeordnet ist, die dazu bestimmt ist, die elektromagnetische Kopplung mit einer charakteristischen Information zu modulieren.

3. Anlage gemäß irgendeinem der Ansprüche 1 oder 2, gekennzeichnet durch eine Umschaltung der Resonanzfrequenz der in dem Kindersitz (14) (40) eingebauten Resonanzkreise, um die elektromagnetische Kopplung zu modulieren.

4. Anlage gemäß Anspruch 3, dadurch gekennzeichnet, daß die Modulation der elektromagnetischen Kopplung mit einem Unterträger verwirklicht wird, der synchron zu der von der Sendeschaltung erzeugten Erregung ist.

5. Anlage gemäß Anspruch 4, dadurch gekennzeichnet, daß die Unterträger von jedem der Resonanzkreise verschieden sind.

6. Anlage gemäß irgendeinem der Ansprüche 3 bis 5, dadurch gekennzeichnet, daß die Demodulation bei dem oder den Empfangsschaltungen mit dem Erregungssignal synchronisiert wird, und daß bei dem Empfang Methoden verwendet werden, bei denen die Koinzidenz mit dem ausgesendeten Signal ausgenutzt wird.

7. Anlage gemäß irgendeinem der Ansprüche 1 bis 6, dadurch gekennzeichnet, daß die Erregungsfrequenz des oder der Sendeschaltungen in einem vorgegebenen Frequenzband periodisch variiert wird.

8. Anlage gemäß irgendeinem der Ansprüche 1 bis 7, dadurch gekennzeichnet, daß die induktive Kopplung durch eine pseudo-aleatorische binäre Sequenz, die dem Resonanzkreis durch eine elektronische Schaltung aufgezwungen wird, moduliert wird.

9. Anlage gemäß irgendeinem der Ansprüche 1 bis 8, dadurch gekennzeichnet, daß in den Kindersitz (14) (40) ein Sensor für die Belegung des Sitzes eingebaut ist, und daß die durch die Modulation der elektromagnetischen Kopplung übermittelte Information durch diesen Belegungssensor modifiziert wird.

10. Anlage gemäß irgendeinem der Ansprüche 1 bis 9, dadurch gekennzeichnet, daß die Sendeschaltung oder die Sendeschaltungen jeweils aus mindestens einer länglichen induktiven Struktur (36, 38) bestehen, die sich über mindestens eine seitliche Seite des Sitzes (34) erstreckt, und daß die Resonanzkreise in dem Kindersitz induktive Spulen (42, 44) umfassen, die auf den beiden Seiten in der Basis des Kindersitzes (40) seitlich gelegen sind, und daß die induktiven Strukturen in dem Passagiersitz (34) und die Spulen (42, 44) in dem Kindersitz (40) Oberflächenabmessungen haben, die größer als der vertikale Abstand zwischen den zwei induktiven Strukturen und den induktiven Spulen sind, oder damit vergleichbar sind.

11. Anlage gemäß irgendeinem der Ansprüche 1 bis 9, dadurch gekennzeichnet, daß die Empfangsschaltung oder die Empfangsschaltungen jeweils aus mindestens einer länglichen induktiven Struktur (36, 38) bestehen, die sich auf mindestens einer seitlichen Seite des Sitzes (34) erstreckt, und daß die Resonanzkreise in dem Kindersitz induktive Spulen (42, 44) umfassen, die in der Basis des Kindersitzes (40) auf den beiden Seiten seitlich gelegen sind, und daß die induktiven Strukturen in dem Passagiersitz (34) und die Spulen (42, 44) in dem Kindersitz (40) Oberflächenabmessungen haben, die größer als der vertikale Abstand zwischen den zwei induktiven Strukturen und den induktiven Spulen sind, oder damit vergleichbar sind.

12. Anlage gemäß Anspruch 10, dadurch gekennzeichnet, daß der Passagiersitz (34) auf jeder Seite mindestens eine Sendestruktur (36, 38) enthält.

13. Anlage gemäß Anspruch 11, dadurch gekennzeichnet, daß der Passagiersitz (34) auf jeder Seite mindestens eine Empfangsstruktur (36, 38) aufweist.

14. Anlage gemäß irgendeinem der Ansprüche 10 bis 13, dadurch gekennzeichnet, daß die Sende- und Empfangsstrukturen von einem in den Sitz (34) eingebauten, flexiblen dünnen Film gebildet werden.

15. Kinder-Hilfssitz, der dazu bestimmt ist, auf einem Passagiersitz (10) eines Kraftfahrzeugs installiert zu werden, wobei der Passagiersitz (10) mindestens eine elektromagnetische Induktions-Sendeschaltung (22) und mindestens eine elektromagnetische Induktions-Empfangsschaltung (24) aufweist, wobei in den Hilfssitz (14) Mittel (16) eingebaut sind, die dazu bestimmt sind, dann, wenn der Kindersitz (14) auf dem Passagiersitz (10) angeordnet ist, die elektromagnetische Kopplung zwischen der Sendeschaltung bzw. den Sendeschaltungen (22) und der Empfangsschaltung bzw. den Empfangsschaltungen (24) zu beeinflussen, um der Empfangsschaltung bzw. den Empfangsschaltungen (24) zu ermöglichen, ein für einen oder mehrere festgelegte Parameter repräsentatives Signal auszugeben, dadurch gekennzeichnet, daß die Mittel mindestens zwei Resonanzkreise (16A, 16B) umfassen, von denen jeder mit einer Modulationsschaltung verbunden ist, wobei die Modulationsschaltungen verschiedene Modulationen erzeugen, um die Resonanzkreise unterscheiden zu können.

16. Kinder-Hilfssitz gemäß Anspruch 15, dadurch gekennzeichnet, daß jeder Resonanzkreis (16A, 16B) eine flache Spule umfaßt, die einer elektronischen Schaltung (32) zugeordnet ist, die dazu bestimmt ist, die elektromagnetische Kopplung mit einer charakteristischen Information zu modulieren.

17. Kinder-Hilfssitz gemäß irgendeinem der Ansprüche 15 oder 16, dadurch gekennzeichnet, daß jeder Resonanzkreis Mittel zur Umschaltung der Resonanzfrequenz des Resonanzkreises aufweist, um die elektromagnetische Kopplung zu modulieren.

18. Kinder-Hilfssitz gemäß Anspruch 17, dadurch gekennzeichnet, daß die Modulation der elektromagnetischen Kopplung mit einem Unterträger verwirklicht wird, der synchron zu der durch die Sendeschaltung erzeugten Erregung ist.

19. Kinder-Hilfssitz gemäß Anspruch 18, dadurch gekennzeichnet, daß die Unterträger von jedem der Resonanzkreise verschieden sind.

20. Kinder-Hilfssitz gemäß irgendeinem der Ansprüche 15 bis 19, dadurch gekennzeichnet, daß jeder Resonanzkreis eine elektronische Schaltung aufweist, um dem Resonanzkreis eine pseudo-aleatorische binäre Sequenz aufzuzwingen.

21. Kinder-Hilfssitz gemäß irgendeinem der Ansprüche 15 bis 20, gekennzeichnet durch einen Sensor für die Belegung des Hilfssitzes.

22. Resonanzkreispaar aus Resonanzkreisen (16A, 16B), das in einen Kinder-Hilfssitz (14) eingebaut ist, der dazu bestimmt ist, auf einem Passagiersitz (10) eines Kraftfahrzeugs installiert zu werden, wobei der Passagiersitz (10) mindestens eine elektromagnetische Induktions-Sendeschaltung (22) und mindestens eine elektromagnetische Induktions-Empfangsschaltung (24) aufweist, wobei die Resonanzkreise (16A, 16B) dazu bestimmt sind, dann, wenn der Kindersitz (14) auf dem Passagiersitz (10) angeordnet ist, die elektromagnetische Kopplung zwischen der Sendeschaltung bzw. den Sendeschaltungen (22) und der Empfangsschaltung bzw. den Empfangsschaltungen (24) zu beeinflussen, um der Empfangsschaltung bzw. den Empfangsschaltungen (24) zu ermöglichen, ein für einen oder mehrere festgelegte Parameter repräsentatives Signal auszugeben, dadurch gekennzeichnet, daß jeder Resonanzkreis (16A, 16B) des Resonanzkreispaars mit einer Modulationsschaltung verbunden ist, und daß die Modulationsschaltungen der zwei Resonanzkreise verschiedene Modulationen erzeugen, um die Resonanzkreise unterscheiden zu können.

23. Resonanzkreispaar gemäß Anspruch 22, dadurch gekennzeichnet, daß jeder Resonanzkreis eine flache Spule umfaßt, die einer elektronischen Schaltung (32) zugeordnet ist, die dazu bestimmt ist, die elektromagnetische Kopplung mit einer charakteristischen Information zu modulieren.

24. Resonanzkreispaar gemäß irgendeinem der Ansprüche 22 oder 23, dadurch gekennzeichnet, daß jeder Resonanzkreis Mittel zur Umschaltung der Resonanzfrequenz des Resonanzkreises aufweist, um die elektromagnetische Kopplung zu modulieren.

25. Resonanzkreispaar gemäß Anspruch 24, dadurch gekennzeichnet, daß die Modulation der elektromagnetischen Kopplung mit einem Unterträger verwirklicht wird, der synchron zu der durch die Sendeschaltung(en) erzeugten Erregung ist.

26. Resonanzkreispaar gemäß Anspruch 25, dadurch gekennzeichnet, daß die Unterträger von jedem der Resonanzkreise verschieden sind.

27. Resonanzkreispaar gemäß irgendeinem der Ansprüche 22 bis 25, dadurch gekennzeichnet, daß jeder Resonanzkreis eine elektronische Schaltung aufweist, um dem Resonanzkreis eine pseudo-aleatorische binäre Sequenz aufzuzwingen.
